# EUROPEAN PATENT APPLICATION

(11) **EP 2 202 949 A1**
(43) Date of publication of application: **30.06.2010**
(21) Application number: 08172932.9
(22) Date of filing: 24.12.2008
(51) Int. Cl.: H04M 1/02

(54) **Multiple-fold portable electronic device**

(71) Applicant: Research In Motion Limited, Waterloo, Ontario N2L 3W8 (CA)
(72) Inventor: Ladouceur, Norman, Waterloo Ontario N2T 1A2 (CA); Griffin, Jason, Kitchener Ontario N2P 2L3 (CA)
(74) Representative: MERH-IP Matias Erny Reichl Hoffmann

(57) **Abstract**

A multiple-fold portable electronic device is provided. The portable electronic device in one embodiment includes a first, second and third planar sections. The first and second planar section are connected by a first joint and foldable in relation to each other. The second and third planar sections are connected by a second joint and foldable in relation to each other. Each planar section can include an input device or an output device or both. (keywords: multiple displays, multiple keyboards, multiple hinges)

## Description

This specification relates generally to portable electronic devices and more particularly relates to a multiple-fold portable electronic device.

Portable electronic devices are ubiquitous because their applications are seemingly limitless. Some examples of portable electronic devices are cell phones, smartphones, email paging devices, Personal Digital Assistants (PDA), audio players, video players, video cameras, still cameras, and portable video games. Increasingly, the functionalities of foregoing are being incorporated into single multi-function electronic devices. One challenge in designing a multi-function electronic devices is to increase the operable surface used for input and output devices, such as display screens, keyboards, trackwheels, cameras, and touch screens. Yet, in maximizing the operable surface, care is also needed to reduce the volume of the device so as to maintain portability. A popular solution is a flip device that pivotally attaches a screen to a keyboard. In use, the flip device is flipped open to expose the screen and the keyboard. In storage, the device is closed like a clam with the screen facing the keyboard. However, as the functionalities of multi-function devices increases, flip devices can prove limiting.

In one embodiment there is preferably provided a multiple-fold portable electronic device comprising: a first planar housing having at least two sides; a second planar housing having at least two sides and connected to said first planar housing via a first joint such that said first planar housing and said second planar housing are foldable in relation to each other between a shut position and an open position; and a third planar housing having at least two sides and connected to said second planar housing via a second joint such that said second planar housing and said third planar housing are foldable in relation to each other between the shut position and the open position.

### BRIEF DESCRIPTION OF THE DRAWINGS

Figure 1 is a perspective view of a double-fold portable electronic device in an open position;

Figure 2 is a perspective view of the double-fold portable electronic device of Figure 1 in a disassembled state;

Figure 3 is a perspective view of the double-fold portable electronic device of Figure 1 in a shut position;

Figure 4 is a side view of the double-fold portable electronic device of Figure 1 transitioning between the open and shut positions;

Figure 5 is a perspective view of the double-fold portable electronic device of Figure 1 in an intermediate position;

Figure 6 is a perspective view of the double-fold portable electronic device of Figure 1 in another intermediate position;

Figure 7 is a block diagram of certain internal components within the electronic device of Figure 1;

Figure 8 is a perspective view of another embodiment of a double-fold portable electronic device of Figure 1.

Figure 9 is a perspective view of a further embodiment of a double-fold portable electronic device of Figure 1.

Figure 10 is a perspective view of a further embodiment of a double-fold portable electronic device of Figure 1.

Figure 11 is a perspective view of a further embodiment of a double-fold portable electronic device of Figure 1.

Figure 12 is a perspective view of a further embodiment of a double-fold portable electronic device of Figure 1.

Figure 13 is a perspective view of a further embodiment of a double-fold portable electronic device of Figure 1.

Figure 14 is a perspective view of a further embodiment of a double-fold portable electronic device of Figure 1.

Figure 15 is a perspective view of a further embodiment of a double-fold portable electronic device of Figure 1.

### DESCRIPTION OF PREFERRED EMBODIMENTS

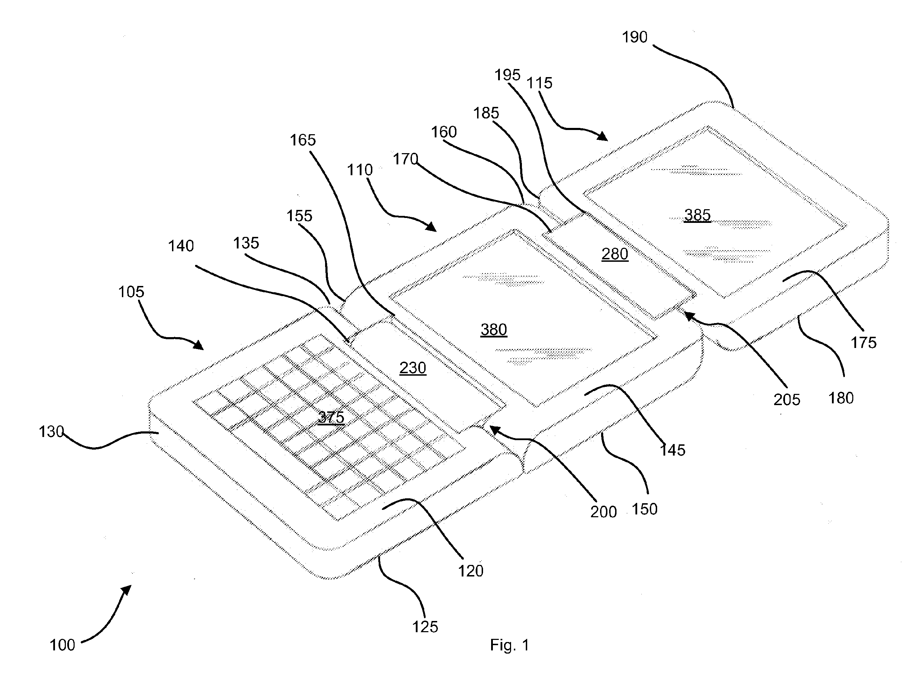

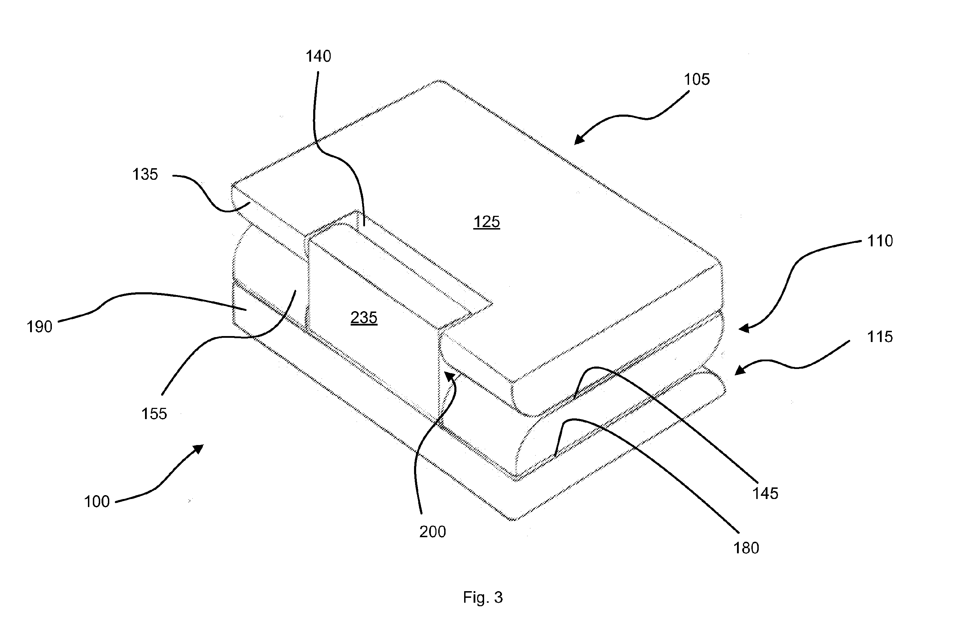

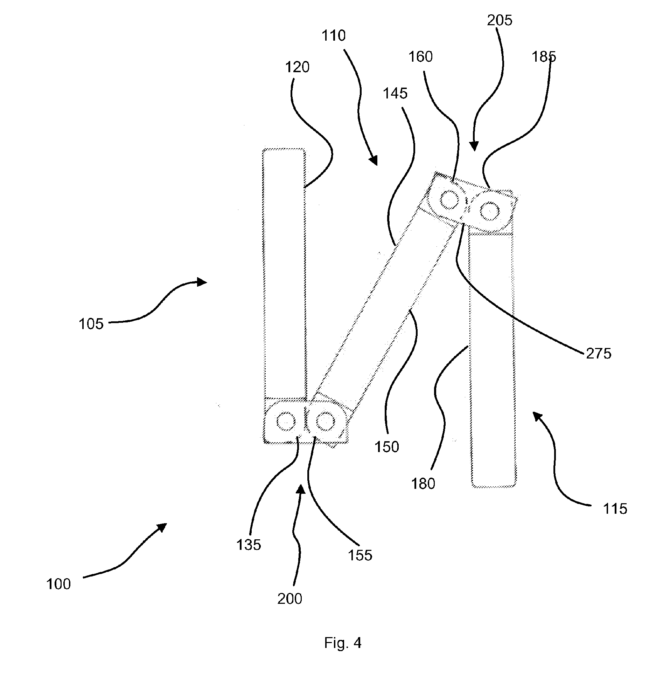

Referring to figures 1, 2, 3, and 4, a double-fold portable electronic device in accordance with a first embodiment is generally indicated at 100. Double-fold portable electronic device 100 has an open position (shown in Figure 1) and a shut position (shown in Figures 3 and 4). Double-fold portable electronic device 100 has a first planar housing 105, a second planar housing 110, and a third planar housing 115. Each planar housing 105, 110, 115 is a hexahedron. First planar housing 105 has a first surface 120, a second surface 125, a first side 130, a second side 135, and a first recess 140 situated in second side 135. Second planar housing 110 has a third surface 145, a fourth surface 150, a third side 155, a fourth side 160, a second recess 165 situated in third side 155, and a third recess 170 situated in fourth side 160. Third planar housing 115 has a fifth surface 175, a sixth surface 180, a fifth side 185, a sixth side 190, and a fourth recess 195 situated in fifth side 185. First planar housing 105 is connected to second planar housing 110 via a first joint 200. First joint 200 is situated in the first recess 140 and second recess 165. Second planar housing 110 is connected to third planar housing 115 via a second joint 205.

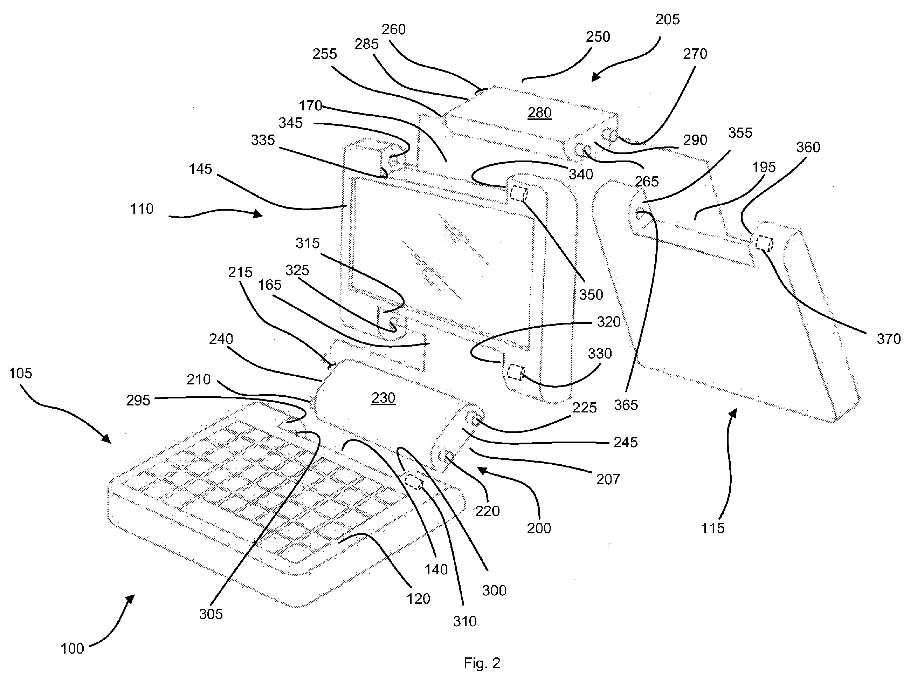

Referring to Figure 2, to illustrate joints 200, 205 and their connections to housings 105, 110, 115 in more detail, double-fold portable electronic device 100 is shown with housings 105, 110, 115 detached from joints 200, 205. First joint 200 comprises a first body 207, a first hinge 210, a second hinge 215, a third hinge 220, and a fourth hinge 225. First body 207 has a lateral cross-section of an elongated C formed by a first rounded side 230 and a first flat side 235 (best seen in Figure 3). First body 207 comprises a first end 240 and a second end 245. First hinge 210 and second hinge 215 extend from first end 240. Third hinge 220 and fourth hinge 225 extend from second end 245. Second joint 205 comprises a second body 250, a fifth hinge 255, a sixth hinge 260, a seventh hinge 265, and a eighth hinge 270. Second body 250 has a lateral cross-section of an elongated C formed by a second rounded side 275 (best seen in Figure 4) and a second flat side 280. Second body 250 comprises a third end 285 and fourth end 290. Fifth hinge 255 and sixth hinge 260 extend from third end 285. Seventh hinge 265 and eighth hinge 270 extend from fourth end 290.

First recess 140 has a first wall 295 and a second wall 300. First wall 295 comprises a first pivot 305. Second wall 300 comprises a second pivot 310. Second recess 165 comprises a third wall 315 and a fourth wall 320. Third wall 315 comprises a third pivot 325. Fourth wall 320 comprises a fourth pivot 330. Third recess 170 comprises a fifth wall 335 and a sixth wall 340. Fifth wall 335 comprises a fifth pivot 345. Sixth wall 340 comprises a sixth pivot 350. Fourth recess 195 comprises a seventh wall 355 and eighth wall 360. Seventh wall 355 comprises a seventh pivot 365. Eighth wall 360 comprises an eighth pivot 370.

First joint 200 is attached to first planar housing 105 via the mating of first hinge 210 with first pivot 305 and third hinge 220 with second pivot 310. First joint 200 is attached to second planar housing 110 via the mating of second hinge 215 with third pivot 325 and fourth hinge 225 with fourth pivot 330. Second joint 205 is attached to second planar housing 110 via the mating of fifth hinge 255 with fifth pivot 345 and seventh hinge 265 with sixth pivot 350. Second joint 205 is attached to third planar housing 115 via the mating of sixth hinge 260 with seventh pivot 365 and eighth hinge 270 with eighth pivot 370.

In the present embodiment, in the open position, first surface 120, first rounded side 230, third surface 145, second flat side 280, and fifth surface 175 all face the same general direction (shown in Figure 1). In the present embodiment, in the shut position, first surface 120 is facing third surface 145, fourth surface 150 is facing sixth surface 180 and double-fold portable electronic device 100 forms a hexahedron that is substantially three times the height of each housing 105, 110, 115 (shown Figure 3).

Referring to Figure 4, double-fold portable electronic device 100 is shown, in a side view, as it transitions between the open position (as shown in Figure 1) and shut position (as shown in Figure 3). In the present embodiment, second side 135, third side 155, fourth side 160, and fifth side 185 are rounded. Transitioning from the open position (shown in Figure 1) to the shut position (shown in Figure 3) can be effected by folding housings 105, 110, 115 onto each other. First planar housing 105 and second planar housing 110 are folded towards each other in the direction that decreases the radial distance between first surface 120 and third surface 145. Second planar housing 110 and third planar housing 115 are folded towards each other in the direction that decreases the radial distance between fourth surface 150 and sixth surface 180.

Transitioning from the shut position (shown in Figure 3) to the open position (shown in Figure 1) can be effected by unfolding housings 105, 110, 115 away from the housing that they are attached to by joints 200, 205. First planar housing 105 and second planar housing 110 are unfolded away from each other in the direction that increases the radial distance between first surface 120 and third surface 145. Second planar housing 110 and third planar housing 115 are unfolded away from each other in the direction that increases the radial distance between fourth surface 150 and sixth surface 180. As can be seen from Figure 4, the rounding of second side 135, third side 155, fourth side 160, and fifth side 185 reduces the friction between the sides when the folding or unfolding occurs.

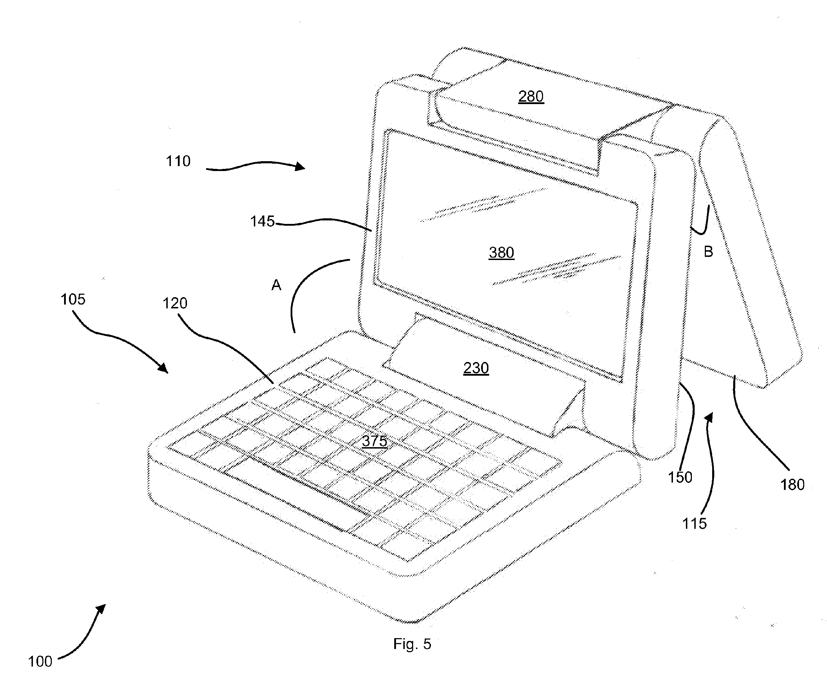

Referring to Figure 5, double-fold portable electronic device 100 is shown in an exemplary intermediate position. First surface 120 and third surface 145 form an obtuse angle A. Fourth surface 150 and sixth surface 180 form an acute angle B. In the present embodiment, first surface 120 contains a keyboard 375, third surface 145 contains a first display screen 380, and fifth surface 175 contains a second display screen 385 (best seen in Figure 1). It is apparent to a person skilled in the art that depending on the function the device, display screens 380, 385 can be a touch screen.

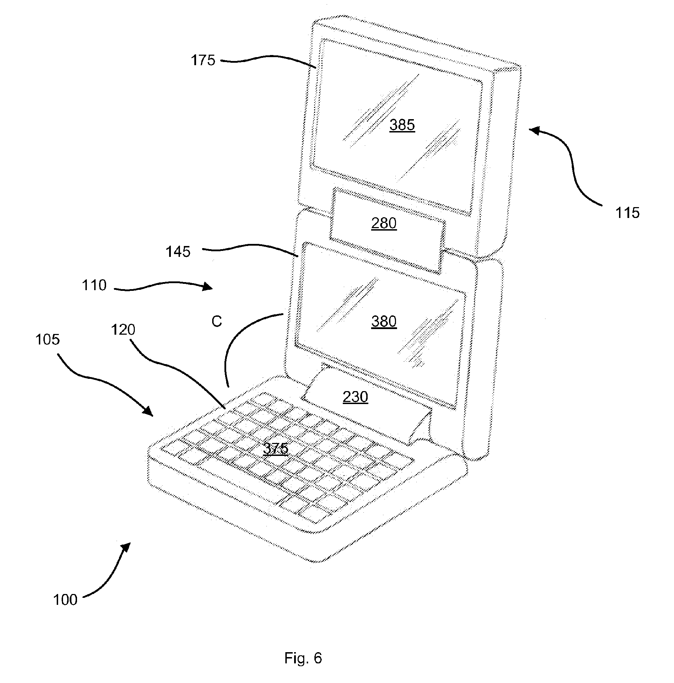

Referring to Figure 6, double-fold portable electronic device 100 is shown in another exemplary intermediate position. First surface 120 and third surface 145 form an obtuse angle C. Third surface 145 and fifth surface 175 are facing the same direction.

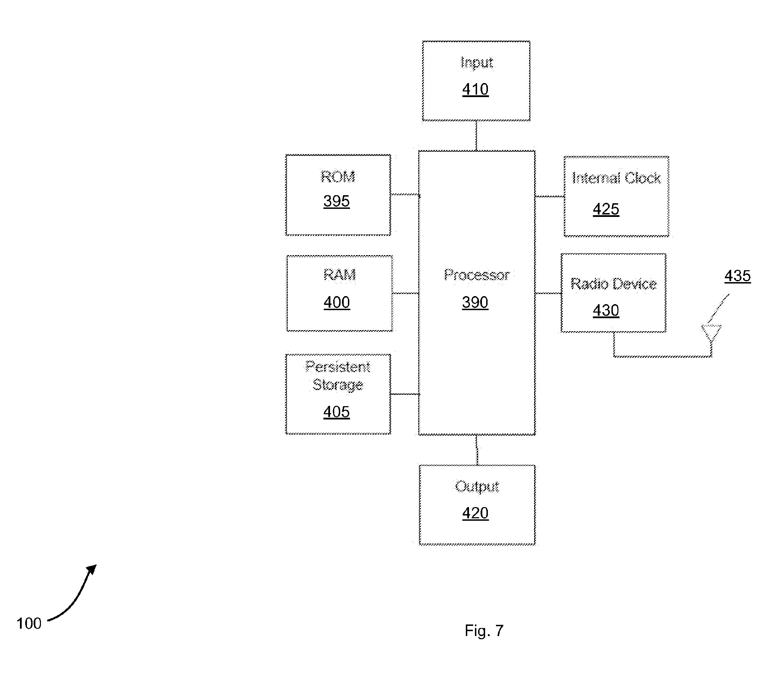

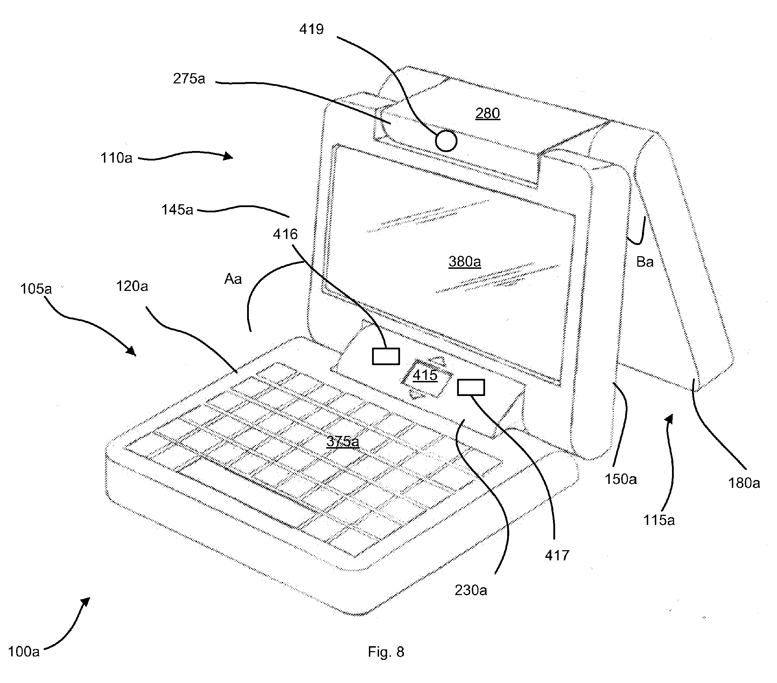

Referring to Figure 7, certain internal components within double-fold portable electronic device 100 are illustrated by way of a block diagram. Double-fold portable electronic device 100 is based on a microcomputer that includes a processor 390 connected to a read-only-memory (ROM) 395 that contains a plurality of applications executable by processor 390 to enable double-fold portable electronic device 100 to provide certain services (e.g. calendar, e-mail, phone, etc.). Processor 390 is also connected to a random access memory (RAM) 400 and a persistent storage device 405, which is responsible for various non-volatile storage functions of double-fold portable electronic device 100. Processor 390 receives input from input devices 410 such as keyboard 375 (shown in Figure 1), display screens 380, 385 (if they are touch screens), trackwheel 415 (shown in Figure 8), and webcam 419 (shown in Figure 8). Processor 390 outputs to output devices 420 such as display screens 380, 385 (shown in Figure 1). Processor 390 is also connected to an internal clock 425 and a radio device 430 which, in turn, is connected to an antenna 435. Together, the radio device 430 and the antenna 435 are used to communicate over a wireless network. Double-fold portable electronic device 100 is operable to receive and transmit communication signals containing data that is communicated to and from a communication system via the radio device 430 and the antenna 435.

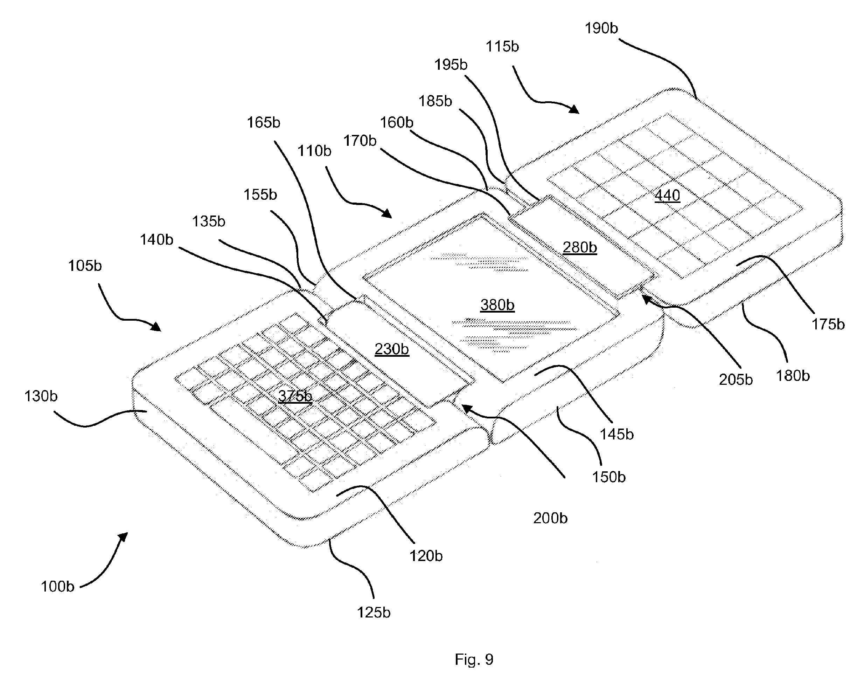

Referring to Figures 1, 5, and 9 exemplary uses for double-fold portable electronic device 100 are shown. In Figures 1, display screens 380, 385 can behave as an extended display screen (i.e., behave as one large screen) or as two separate display screens. For example, when processor 390 is running an application that requires a large display area, processor 390 can treat display screens 380, 385 as an extended display screen. One example application of double-fold portable electronic device 100 using display screens 380, 385 as two separate display screens is to have first display screen 380 display a map and have second display screen 385 display a zoomed in area of the map. Another example application of double-fold portable electronic device 100 using display screens 380, 385 as two separate display screens is to have first display screen 380 display thumbnails and have second display screen 385 display the file represented by a thumbnail that has been selected from first display screen 380. The arrangement of the display screens 380, 385 can automatically control the screens' behaviour. For example, transitioning from the open position (see Figure 1) to the intermediate position shown in Figure 5, can cause processor 390 to change the treatment of display screens 380, 385 from an extended display screen to two separate display screens or duplicate display screens (i.e., anything shown on one screen is correspondingly shown on the other screen). Likewise, transitioning from the intermediate position shown in Figure 5 to the open position (see Figure 1), can cause processor 390 to change the treatment of display screens 380, 385 from two separate display screens or duplicate display screens to an extended display screen. In Figure 9, second display screen 385 behaves as a touchscreen keyboard 440. This can be used to play games or service any activity that requires input from more than one user. Touchscreen keyboard 440 may also be used as a touch phone keypad.

Referring to Figure 8, a double-fold portable electronic device in accordance with another embodiment is indicated generally at 100a. Double-fold portable electronic device 100a is substantially the same as double-fold portable electronic device 100 and like elements of double-fold portable electronic device 100a bear the same reference characters, but followed by the suffix "a". However, unlike double-fold portable electronic device 100, double-fold portable electronic device 100a is shown in Figure 8 displaying a trackwheel 415, a first button 416 and a second button 417 on either side of trackwheel 415, all three components embedded in first rounded side 230a, and a webcam 419 embedded in the side of second rounded side 275a. It is apparent to a person skilled in the art that trackwheel 415 can be other similar input devices such as a trackball, an optical jog ball, and a joy stick.

Referring to Figure 9, a double-fold portable electronic device in accordance with yet another embodiment is indicated generally at 100b. Double-fold portable electronic device 100b is substantially the same as double-fold portable electronic device 100 and like elements of double-fold portable electronic device 100a bear the same reference characters, but followed by the suffix "b". However, unlike double-fold portable electronic device 100, double-fold portable electronic device 100b is shown in Figure 9 displaying a touchscreen keyboard 440 on fifth surface 175b.

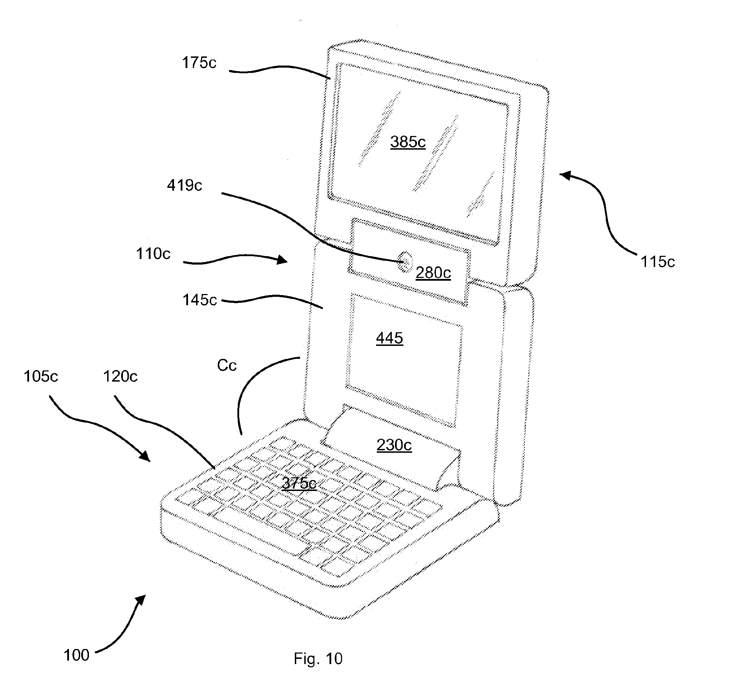

Referring to Figure 10, a double-fold portable electronic device in accordance with yet another embodiment is indicated generally at 100c. Double-fold portable electronic device 100c is substantially the same as double-fold portable electronic device 100 and like elements of double-fold portable electronic device 100c bear the same reference characters, but followed by the suffix "c". However, unlike double-fold portable electronic device 100, double-fold portable electronic device 100c is shown in Figure 10 displaying a touchpad 445 on third surface 145c.

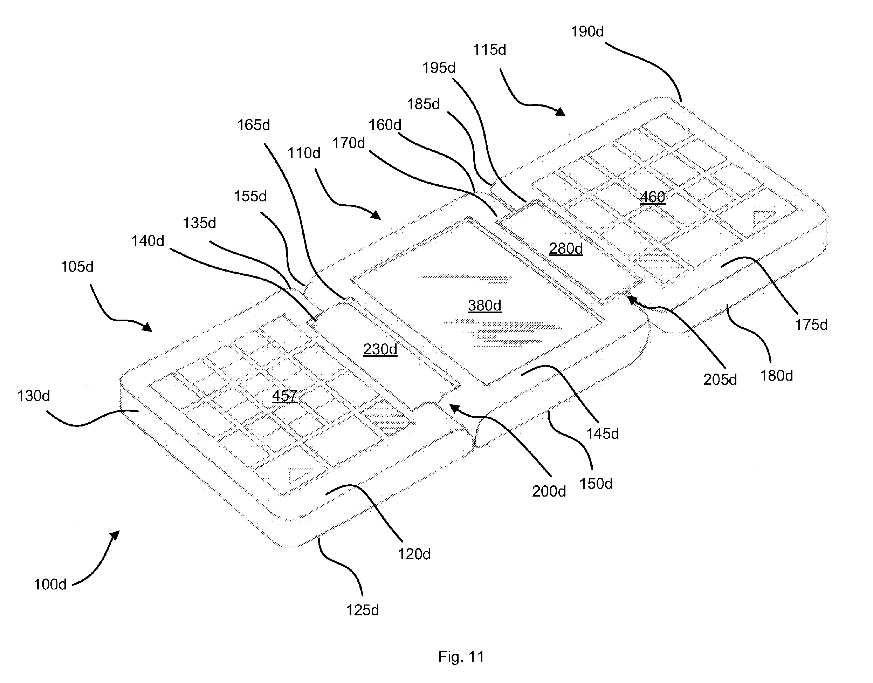

Referring to Figure 11, a double-fold portable electronic device in accordance with yet another embodiment is indicated generally at 100d. Double-fold portable electronic device 100d is substantially the same as double-fold portable electronic device 100 and like elements of double-fold portable electronic device 100d bear the same reference characters, but followed by the suffix "d". However, unlike double-fold portable electronic device 100, double-fold portable electronic device 100d is shown in Figure 11 displaying a left half keyboard 457 on first surface 120d and a right half keyboard 460 on fifth surface 175d. Left half keyboard 457 contains the keys of the left half of a QWERTY keyboard and right half keyboard 460 contains the keys of the right half of a QWERTY keyboard.

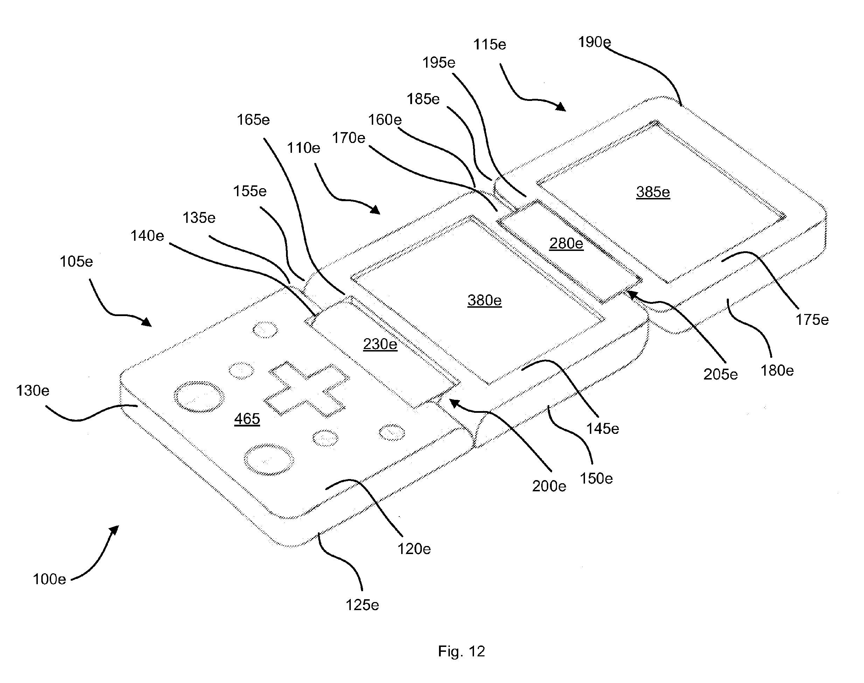

Referring to Figure 12, a double-fold portable electronic device in accordance with yet another embodiment is indicated generally at 100e. Double-fold portable electronic device 100e is substantially the same as double-fold portable electronic device 100 and like elements of double-fold portable electronic device 100e bear the same reference characters, but followed by the suffix "e". However, unlike double-fold portable electronic device 100, double-fold portable electronic device 100e is shown in Figure 12 displaying a game control pad 465 on first surface 120e.

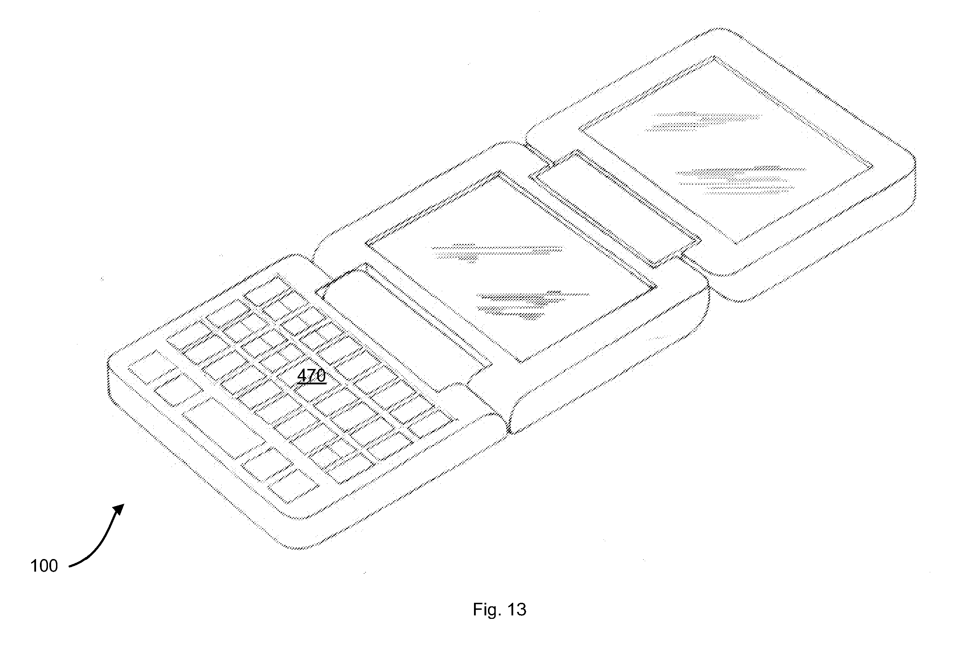

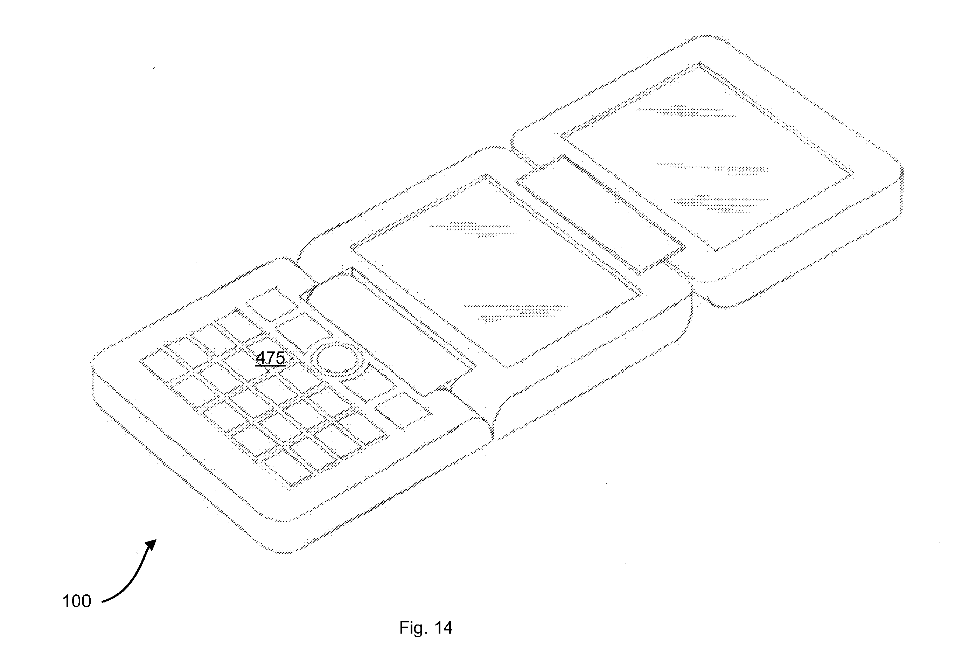

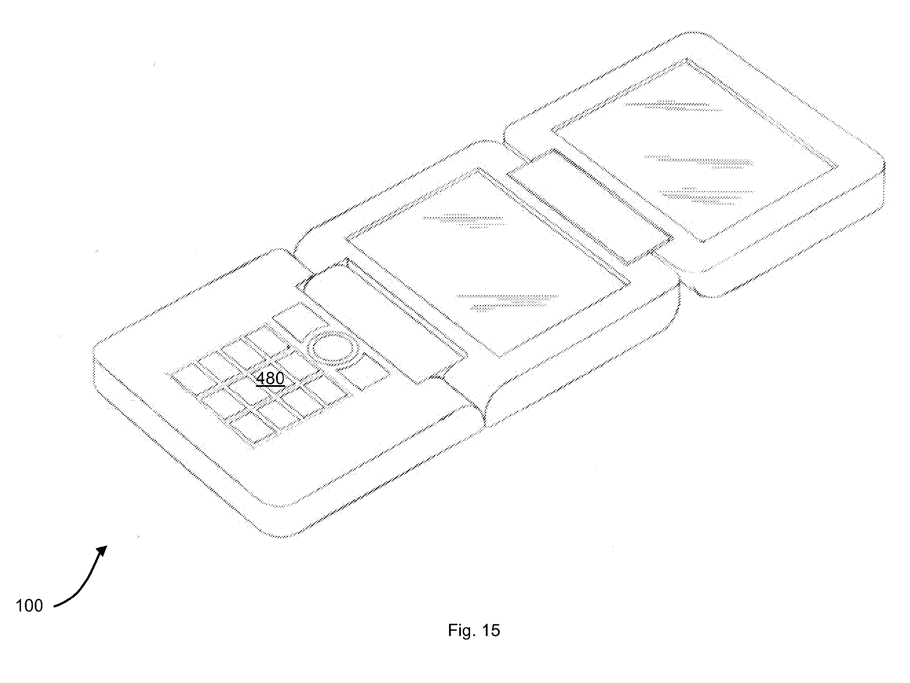

While the embodiments discussed herein are directed to specific embodiments, it will be understood that subsets and variations of the embodiments are within the scope of the invention. For example, webcam 419 may be replaced by speakers. It is apparent to a person skilled in the art that keyboard 375, as drawn is symbolic of a keyboard and that keyboard 375 may be a QWERTY keyboard 470 (see Figure 13), a SURETYPE^{®} keyboard 475 (see Figure 14), telephone keyboard 480 (see Figure 15), a QWERTZ keyboard, a QWERTU keyboard, a DVORAK, or other keyboards.

## Claims

1. A multiple-fold portable electronic device comprising:
a first planar housing having at least two sides;
a second planar housing having at least two sides and connected to said first
planar housing via a first joint such that said first planar housing and said second planar housing are foldable in relation to each other between a shut
position and an open position; and
a third planar housing having at least two sides and connected to said second planar housing via a second joint such that said second planar housing and said third planar housing are foldable in relation to each other between the shut position and the open position.

2. The portable electronic device of claim 1 wherein each of said planar housings is substantially the same size such then when said electronic device is in said shut position and/or in said open position said electronic device has the form factor of a hexahedron.

3. The portable electronic device of claim 1 or claim 2 wherein said second planar housing is pivotable in relation to said first planar housing via said first joint such that said first planar housing and said second planar housing are rotatable in relation to each other between at least a first parallel position and at least a first perpendicular position.

4. The portable electronic device of any one of claims 1 to 3 wherein said third planar housing is pivotable in relation to said second planar housing via said second joint such that said second planar housing and said third planar housing are rotatable in relation to each other between at least a second parallel position and at least a second perpendicular position.

5. The portable electronic device of any one of the preceding claims wherein said sides connected to said joints are rounded.

6. The portable electronic device of any one of the preceding claims wherein said first planar housing comprises a first surface and a second surface, an input device disposed on said first surface, said second planar housing comprises a third surface and a fourth surface, a first display screen disposed on said third surface, said third planar housing comprises a fifth surface and a sixth surface, a second display screen or a second input device disposed on said fifth surface, said first, third and fifth surfaces all facing in the same general direction when said device is in said open position.

7. The portable electronic device of claim 6 wherein said first joint comprises a first rounded side and a first side surface, and said second joint comprises a second rounded side and a second flat side, said first surface, third surface, fifth surface, first rounded side, and second flat side all facing in the same general direction when said device is in said open position.

8. The portable electronic device of claim 7 wherein said input device comprises any of QWERTY keyboards, SURETYPE keyboards, and game controllers.

9. The portable electronic device of claim 8 wherein at least one of said first and second display screens is a touch screen.

10. The portable electronic device of claim 8 or claim 9 wherein said first rounded side comprises a trackwheel.

11. The portable electronic device of claim 10 wherein said first rounded side further comprises a first button and a second button disposed on either side of said trackwheel.

12. The portable electronic device of claim 11 wherein said second rounded side comprises a webcam.

13. The portable electronic device of any one of claims 6 to 12 wherein said first input device is a left half of a QWERTY keyboard and said second input device is a right half of said QWERTY keyboard.

## Amended claims

### Amended claims in accordance with Rule 137(2) EPC.

**1.** A multiple-fold portable electronic device comprising:
a first planar housing (105) having a first side (130), a first rounded side (135), a first surface (120), and a second surface (125);
a second planar housing (110) having a second rounded side (155), a third rounded side (160), a third surface (145), and a fourth surface (150), said second planar housing (110) connected to said first planar housing (105) via a first joint (200) such that said first planar housing (105) and said second planar housing (110) are foldable in relation to each other between a shut position and an open position, said first joint (200) having a fourth rounded side (230) and a first flat surface (235); and
a third planar housing (115) having a third side (190), a fifth rounded side (185), a fifth surface (175), and a sixth surface (180) and connected to said second planar housing (110) via a second joint (205) such that said second planar housing (110) and said third planar housing (115) are foldable in relation to each other between the shut position and the open position, said second joint (205) having a fifth rounded side (275) and a second flat side (280), said first surface (120), third surface (145), fifth surface (175), fourth rounded side (230), and second flat side (280) all facing in a substantially same direction when said device is in said open position, said rounded sides (135, 155, 160, 185) connected to said joints (200, 205), at least one of said joints (200, 205) comprising a first input device.

**2.** The portable electronic device of claim 1 wherein each of said planar housings (105, 110, 115) is substantially the same size such then when said electronic device is in said shut position and/or in said open position said electronic device has the form factor of a hexahedron.

**3.** The portable electronic device of claim 1 or claim 2 wherein said second planar (110) housing is pivotable in relation to said first planar housing (105) via said first joint (200) such that said first planar housing (105) and said second planar housing (110) are rotatable in relation to each other between at least a first parallel position and at least a first perpendicular position.

**4.** The portable electronic device of any one of claims 1 to 3 wherein said third planar housing (115) is pivotable in relation to said second planar housing (110) via said second joint (205) such that said second planar housing (110) and said third planar housing (115) are rotatable in relation to each other between at least a second parallel position and at least a second perpendicular position.

**5.** The portable electronic device of any one of the preceding claims wherein said first planar housing (105) comprises a second input device disposed (375) on said first surface (120), said second planar housing (110) comprises a first display screen (380) disposed on said third surface (145), and said third planar housing (115) comprises a second display screen (385) or a third input device (440) disposed on said fifth surface (175).

**6.** The portable electronic device of claim 5 wherein at least one of said second and third input devices comprises any of QWERTY keyboards (470), SURETYPE keyboards (475), and game controllers (465).

**7.** The portable electronic device of claim 6 wherein at least one of said first and second display screens is a touch screen.

**8.** The portable electronic device of claim 6 or claim 7 wherein said first input device comprises a trackwheel (415).

**9.** The portable electronic device of claim 8 wherein said fourth rounded side (230) further comprises a first button (416) and a second button (417) disposed on either side of said trackwheel (415).

**10.** The portable electronic device of claim 8 wherein said fifth rounded side (275) comprises a webcam (419).

**11.** The portable electronic device of any one of claims 5 to 9 wherein said second input device comprises a left half of a QWERTY keyboard (457) and said third input device comprises a right half of said QWERTY keyboard (460).
